# EUROPEAN PATENT APPLICATION

(11) **EP 3 493 110 A1**
(43) Date of publication of application: **05.06.2019**
(21) Application number: 18209146.2
(22) Date of filing: 29.11.2018
(51) Int. Cl.: G06K 9/00, G06F 17/28, G06K 9/22, G06K 9/32

(54) **ELECTRONIC DEVICE RECOGNIZING TEXT IN IMAGE**

(30) Priority: 29.11.2017 KR 20170162238 U
(71) Applicant: Samsung Electronics Co., Ltd., Gyeonggi-do 16677 (KR)
(72) Inventor: CHOI, Ju Yong, 16677 Suwon-si, (KR); KIM, Jin Hyun, 16677 Suwon-si, (KR); KIM, Mi Su, 16677 Suwon-si, (KR); CHOE, Jeong In, 16677 Suwon-si, (KR); CHOI, Hyun Suk, 16677 Suwon-si, (KR)
(74) Representative: HGF Limited

(57) **Abstract**

An electronic device is provided. The electronic device includes a housing, a display, an image sensor, a wireless communication circuit, a processor, and a memory coupled to the processor. The memory stores instructions. The instructions, when executed, cause the processor to receive image data from the image sensor, to determine a first text based on at least part of the image data, to display the determined first text on the display, to transmit the image data to an external server through the wireless communication circuit, to receive non-image data including a second text from the external server, and to display the second text together with the first text on the display and/or change at least part of the first text displayed on the display based on at least part of the second text, after displaying the determined first text.

## Description

### PRIORITY

This application is based on and claims priority of a Korean patent application number 10-2017-0162238, filed on November 29, 2017, in the Korean Intellectual Property Office, the disclosure of which is incorporated by reference herein in its entirety.

### BACKGROUND OF THE INVENTION

### 1. Field of the Invention

The disclosure relates to an electronic device recognizing text included in an image.

### 2. Background of the Invention

An electronic device such as a smartphone, a tablet personal computer (PC), and the like, may perform various functions such as a call, video playback, Internet search, and the like. The electronic device may be equipped with a camera module (including a lens, an image sensor, and the like). The electronic device may capture a photo or a video by using the camera module.

Recently, technology that recognizes (e.g., optical character recognition (OCR)) text included in the image captured through the camera module and translates the recognized text into a language that is easy for the user to recognize has been developed.

The above information is presented as background information only to assist with an understanding of the present disclosure. No determination has been made, and no assertion is made, as to whether any of the above might be applicable as prior art with regard to the present disclosure.

### SUMMARY OF THE INVENTION

Aspects of the present disclosure are to address at least the above-mentioned problems and/or disadvantages and to provide at least the advantages described below.

An electronic device of the related art may use a method of recognizing characters through internal calculations. In this case, it is possible to display a relatively fast translation result by performing a character recognition process without using an external server. However, the accuracy of the translation may be lowered.

Another electronic device of the related art may use a method of recognizing characters through the calculation of an external server. In this case, the accuracy of the translation may increase. However, the time at which the translation result is displayed may be delayed.

Another electronic device of the related art may recognize characters by combining a method of recognizing characters through internal calculations and a method of recognizing characters through the calculation of an external server. In this case, it is difficult to display the translation result to the user in real time like a live view image because one method is used only secondarily.

Aspects of the disclosure are to address at least the above-mentioned problems and/or disadvantages and to provide at least the advantages described below. Accordingly, an aspect of the disclosure is to provide an apparatus and method for processing image data to provide text in one of a plurality of languages.

Additional aspects will be set forth in part in the description which follows and, in part, will be apparent from the description, or may be learned by practice of the presented embodiments.

In accordance with an aspect of the disclosure, an electronic device is provided. The electronic device includes a housing, a display exposed through a first portion of the housing, an image sensor exposed through a second portion of the housing, a wireless communication circuit, a processor coupled to the display, the image sensor, and the wireless communication circuit, and a memory coupled to the processor. The memory may store instructions. When executed, the instructions may cause the processor to receive image data from the image sensor, to determine a first text based on at least part of the image data, to display the determined first text on the display, to transmit the image data to an external server through the wireless communication circuit, to receive non-image data including a second text from the external server, and to display the second text together with the first text on the display and/or change at least part of the first text displayed on the display based on at least part of the second text, after displaying the determined first text.

The electronic device according to various embodiments of the disclosure may increase the speed of character recognition and the accuracy of character recognition, by simultaneously using a process to recognize characters through internal calculations and a process to recognize characters using an external server.

The electronic device according to various embodiments of the disclosure may store a language associated with character recognition performed in a previous image frame through a server and may increase the speed of a character recognition process through internal calculations by using the stored translation language.

An electronic device according to various embodiments of the disclosure may naturally switch the character recognition result through internal calculations to the character recognition result using an external server, thereby reducing the difference that the user can perceive, in a character recognition process.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates an electronic device capable of recognizing a character in an image, according to various embodiments of the disclosure;
FIG. 2 is an internal block diagram of an electronic device, according to various embodiments of the disclosure;
FIG. 3 is a flowchart illustrating a character recognition process, according to various embodiments of the disclosure;
FIG. 4 illustrates a difference between a local character recognition result and a server character recognition result, according to various embodiments of the disclosure;
FIG. 5 is a signal flowchart illustrating a translation process of a first text through a translation server, according to various embodiments of the disclosure;
FIG. 6 is a flowchart associated with setting of a recognition target language, according to various embodiments of the disclosure;
FIG. 7 is a view associated with setting of a recognition target language, according to various embodiments of the disclosure;
FIG. 8 is an internal block diagram of an electronic device, according to various embodiments of the disclosure;
FIG. 9 is a screen view illustrating an image conversion effect, according to various embodiments of the disclosure;
FIG. 10 is a screen of the disclosure view associated with sensing of a plurality of languages, according to various embodiments of the disclosure; and
FIG. 11 is a block diagram of an electronic device in a network environment, according to various embodiments of the disclosure.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the disclosure disclosed herein, the expressions "have", "may have", "include" and "comprise", or "may include" and "may comprise" used herein indicate existence of corresponding features (for example, elements such as numeric values, functions, operations, or components) but do not exclude presence of additional features.

In the disclosure disclosed herein, the expressions "A or B", "at least one of A or/and B", or "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used herein may refer to various elements of various embodiments of the disclosure, but do not limit the elements. For example, such terms are used only to distinguish an element from another element and do not limit the order and/or priority of the elements. For example, a first user device and a second user device may represent different user devices irrespective of sequence or importance. For example, without departing the scope of the disclosure, a first element may be referred to as a second element, and similarly, a second element may be referred to as a first element.

It will be understood that when an element (for example, a first element) is referred to as being "(operatively or communicatively) coupled with/to" or "connected to" another element (for example, a second element), it can be directly coupled with/to or connected to the other element or an intervening element (for example, a third element) may be present. In contrast, when an element (for example, a first element) is referred to as being "directly coupled with/to" or "directly connected to" another element (for example, a second element), it should be understood that there are no intervening element (for example, a third element).

According to the situation, the expression "configured to" used herein may be used as, for example, the expression "suitable for", "having the capacity to", "designed to", "adapted to", "made to", or "capable of'. The term "configured to (or set to)" must not mean only "specifically designed to" in hardware. Instead, the expression "a device configured to" may mean that the device is "capable of' operating together with another device or other components. For example, a "processor configured to (or set to) perform A, B, and C" may mean a dedicated processor (for example, an embedded processor) for performing a corresponding operation or a generic-purpose processor (for example, a central processing unit (CPU) or an application processor) which may perform corresponding operations by executing one or more software programs which are stored in a memory device.

Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal meaning unless expressly so defined herein in various embodiments of the disclosure. In some cases, even if terms are terms which are defined in the specification, they may not be interpreted to exclude embodiments of the disclosure.

An electronic device according to various embodiments of the disclosure may include at least one of smartphones, tablet personal computers (PCs), mobile phones, video telephones, electronic book readers, desktop PCs, laptop PCs, netbook computers, workstations, servers, personal digital assistants (PDAs), portable multimedia players (PMPs), moving picture experts group phase 1 or phase 2 (MPEG-1 or MPEG-2) audio layer 3 (MP3) players, mobile medical devices, cameras, and wearable devices. According to various embodiments of the disclosure, the wearable devices may include accessories (for example, watches, rings, bracelets, ankle bracelets, glasses, contact lenses, or head-mounted devices (HMDs)), cloth-integrated types (for example, electronic clothes), body-attached types (for example, skin pads or tattoos), or implantable types (for example, implantable circuits).

Hereinafter, electronic devices according to an embodiment of the disclosure will be described with reference to the accompanying drawings. The term "user" used herein may refer to a person who uses an electronic device or may refer to a device (for example, an artificial intelligence electronic device) that uses an electronic device.

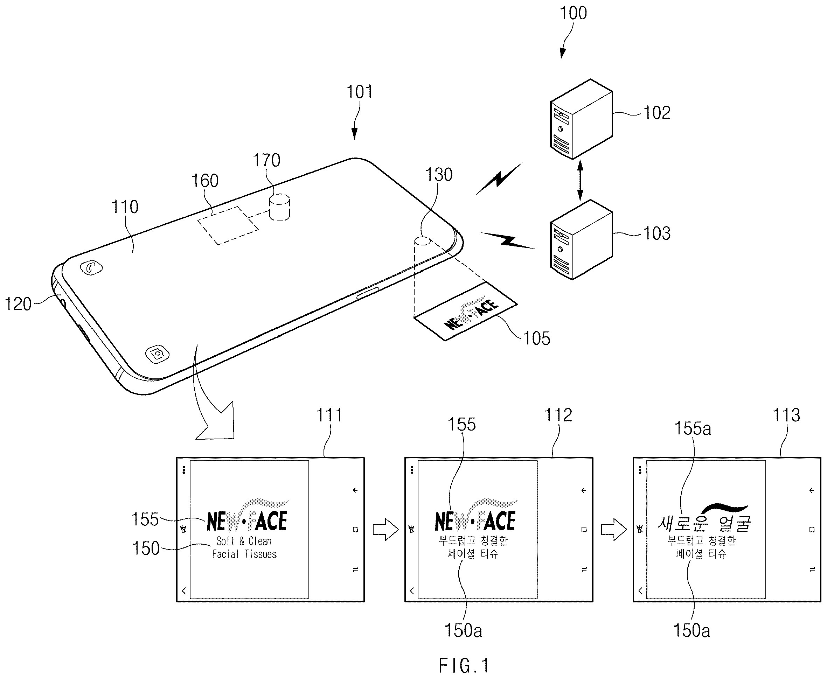

FIG. 1 illustrates an electronic device capable of recognizing a character in an image, according to various embodiments of the disclosure.

Referring to FIG. 1, a character recognition system 100 may include an electronic device 101, a character recognition server 102, and a translation server 103. The character recognition system 100 may recognize characters (e.g., optical character recognition (OCR)) in the image captured by the electronic device 101, may translate the character to another language, and may display the translated result on a display 110 of the electronic device 101.

According to various embodiments, the electronic device 101 may include the display 110, a housing (or a body unit) 120, a camera module (or an image sensor) 130, a communication circuit (not illustrated), a processor 160, and a memory 170.

The display 110 may output content such as text, an image, and the like. For example, the display 110 may output a live view (or a preview image) based on image data collected through the camera module 130. A user may capture a photo or a video while verifying an object 105 captured through a live view image.

According to various embodiments, the display 110 may display the translated text (hereinafter, referred to as a "translation text") associated with the character included in the live view image. For example, when the user wants to know the meaning of the foreign language written in the object 105, the user may capture the object 105 by using the camera module 130. The user may verify a translation text displayed in a live view image of the display 110 and may understand the meaning of the displayed foreign language.

The housing (or a body unit) 120 may fix the display 110 and may protect various internal components. The housing 120 may include a button (not illustrated), a sensor window (not illustrated), a speaker (not illustrated), the camera module 130, and the like, which is positioned outside the housing 120.

The housing (or a body unit) 120 may include various components such as the communication circuit (not illustrated), the processor 160, the memory 170, a printed circuit board (not illustrated), a battery (not illustrated), and the like, which is positioned inside the housing and which is necessary to drive the electronic device 101.

The processor 160 may perform various data processing and calculation for driving the electronic device 101. According to various embodiments, the processor 160 may sense characters (e.g., OCR) included in an image collected through the camera module 130. The processor 160 may display the translation text obtained by translating the sensed characters into another language, on the display 110.

According to various embodiments, the processor 160 may recognize characters, which is included in the image collected through the camera module 130, through a character recognition process (hereinafter, referred to as a "local character recognition process") using data processing inside the electronic device 101 or through a character recognition process (hereinafter, referred to as a "server character recognition process") using the external character recognition server 102.

For example, the processor 160 may output a live view image 111 associated with the object 105 through the display 110. The live view image 111 may include a first character area 150 and a second character area 155.

In the local character recognition process, the processor 160 may not recognize characters in the second character area 155, on which graphic processing is performed, and may process the second character area 155 as a general image area. The processor 160 may determine that the first character area 150 is an area including characters and may perform the local character recognition process.

The processor 160 may recognize 'S', 'o', 'f', 't', '&', 'c', 'l', 'e', 'a', 'n', 'F', 'a', 'c', 'i', 'a', 'l', 'T', 'i', 's', 's', 'u', 'e', and 's' included in the first character area 150 as characters, respectively. The processor 160 may combine the recognized characters to recognize "Soft", "&", "Clean", "Facial" and "Tissues" as words, respectively. The processor 160 may combine the recognized words to recognize "Soft & Clean Facial Tissues" as one line. The processor 160 may display a live view image 112 primarily displaying " 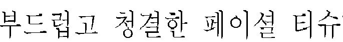 " 150a obtained by translating "Soft & Clean Facial Tissues".

When receiving the recognition result of the second character area 155, on which graphic processing is performed, from the external character recognition server 102, the processor 160 may display a live view image 113 displaying " 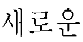 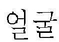 " 155a obtained by translating "New Face" included in the second character area 155.

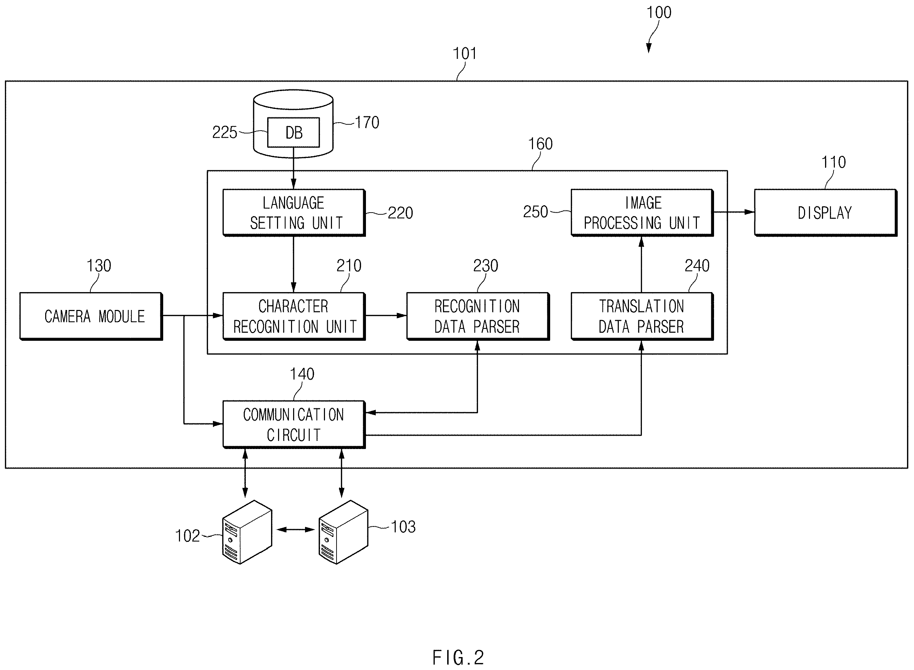

Additional information about the local character recognition process or the server character recognition process will be provided through FIGS. 2 to 10.

The memory 170 may store information necessary for character recognition, the character recognition result, the translation result, and the like.

The character recognition server 102 may receive image data from the electronic device 101. The character recognition server 102 may sense characters included in the received image data. The character recognition server 102 may transmit, to the electronic device 101, a second text sensed through the character recognition process and placement information (e.g., coordinate information, size information, shape information, and the like) of the second text.

The translation server 103 may receive text (hereinafter, referred to as an original text) (e.g., a first text or a second text) to be translated and language information (e.g., original language and translation target language) from the electronic device 101. The translation server 103 may transmit text (hereinafter, referred to as a "translation text") obtained by translating the original text into a translation target language, to the electronic device 101.

According to various embodiments, the character recognition server 102 may directly transmit the server character recognition result to the translation server 103. The translation server 103 may transmit the translation text corresponding to text received from the character recognition server 102, to the electronic device 101. The translation server 103 may receive information about a translation target language from the character recognition server 102 or the electronic device 101, or may generate the translation text based on predetermined language information.

FIG. 2 is an internal block diagram of an electronic device, according to various embodiments of the disclosure. An embodiment is exemplified in FIG. 2 as components necessary for character recognition. However, various embodiments are not limited thereto.

Referring to FIG. 2, the camera module 130 may collect image data. The camera module 130 may convert the light input through a lens into an electrical signal to generate image data.

According to an embodiment, the generated image data may be used to output a live view image (e.g., the live view image 111 of FIG. 1) through the display 110. The quality of the live view image may be changed depending on the resolution of the display 110. For example, an image displayed on the display 110 of full high definition (HD) (FHD) may be generated as a preview image, the resolution of which is converted to a FHD resolution.

According to an embodiment, the generated image data may be stored in the memory 170. The stored image, the resolution of which is changed depending on the user's definition, may be stored. For example, an image having a capacity of 5 Mbyte, 3 Mbyte, and the like may be stored in the memory 170.

According to various embodiments, image data (hereinafter, referred to as a "vision input") for recognizing characters collected through the camera module 130 may be transmitted to a character recognition unit 210 in the processor 160. The character recognition unit 210 may perform a local character recognition process based on the received image data. A first text and placement information (e.g., coordinate information, size information, shape information, and the like) of the first text may be extracted through the local character recognition process.

According to various embodiments, an image data (a vision input) for character recognition collected through the camera module 130 may be transmitted to the external character recognition server 102 through a communication circuit 140. The character recognition server 102 may perform a server character recognition process based on the received image data. A second text and placement information (e.g., coordinate information, size information, shape information, and the like) of the second text may be extracted through the server character recognition process.

According to various embodiments, the processor 160 may include the character recognition unit 210, a language setting unit 220, a recognition data parser 230, a translation data parser 240, and an image processing unit 250. The character recognition unit 210, the language setting unit 220, the recognition data parser 230, the translation data parser 240, and the image processing unit 250 may be programs or a set of instructions, which is executed by the processor 160.

The character recognition unit 210 may perform the local character recognition process. The character recognition unit 210 may receive the vision input from the camera module 130 and may extract characters from the vision input. The character recognition unit 210 may convert the extracted characters into structured data.

In an embodiment, the character recognition unit 210 may structure characters in units of characters, words, lines, blocks, and pages. For example, when "Good morning" is included in the vision input, the character recognition unit 210 may recognize 'G', 'o', 'o,' 'd', 'm', 'o', 'r', 'n', 'i', 'n', and 'g' as characters, respectively. The character recognition unit 210 may combine the recognized characters to recognize "Good" and "morning" as words, respectively. The character recognition unit 210 may combine the recognized words to recognize "Good morning" as one line. When one line is included in the vision input, a block and a page may be the same as the line.

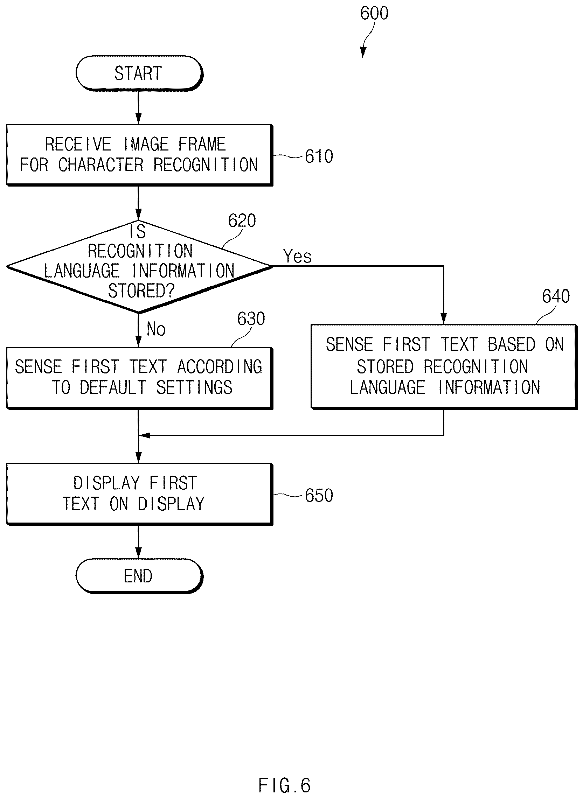

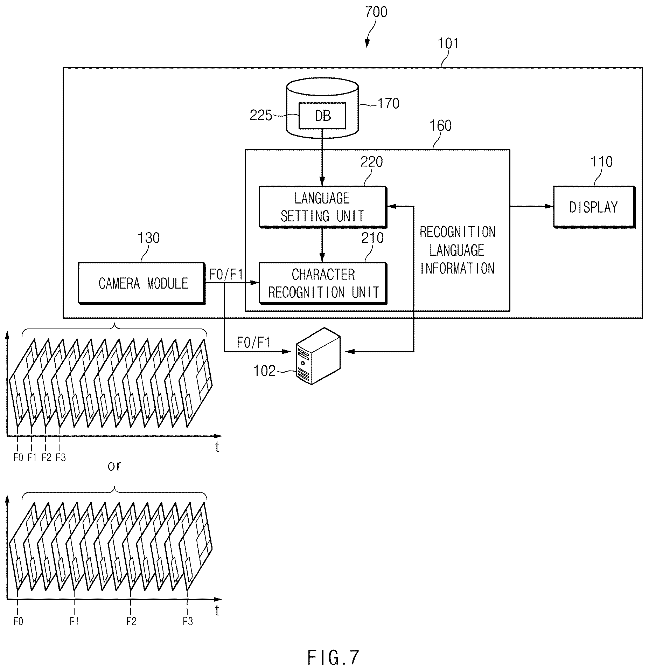

The language setting unit 220 may set a recognition target language necessary for the character recognition unit 210 to perform the local character recognition process. For example, when the language setting unit 220 sets the recognition target language to English, the character recognition unit 210 may recognize English characters included in the vision input. According to various embodiments, the language setting unit 220 may change the recognition target language depending on the result of performing the server character recognition process on the previous image frame. Additional information about the settings of the recognition target language may be provided through FIGS. 6 and 7.

The memory 170 may store information necessary for the character recognition process. For example, the memory 170 may store a translation result storage DB 225 associated with language settings. The language setting unit 220 may refer to the recognition target language stored in the translation result storage DB 225.

The recognition data parser (a first data manager) 230 may convert the first text according to the local character recognition result or the second text according to the server character recognition result, in the form capable of being easily recognized by the translation server 103. For example, the recognition data parser 230 may convert the received first text in units of lines such that the translation server 103 easily translates the received first text.

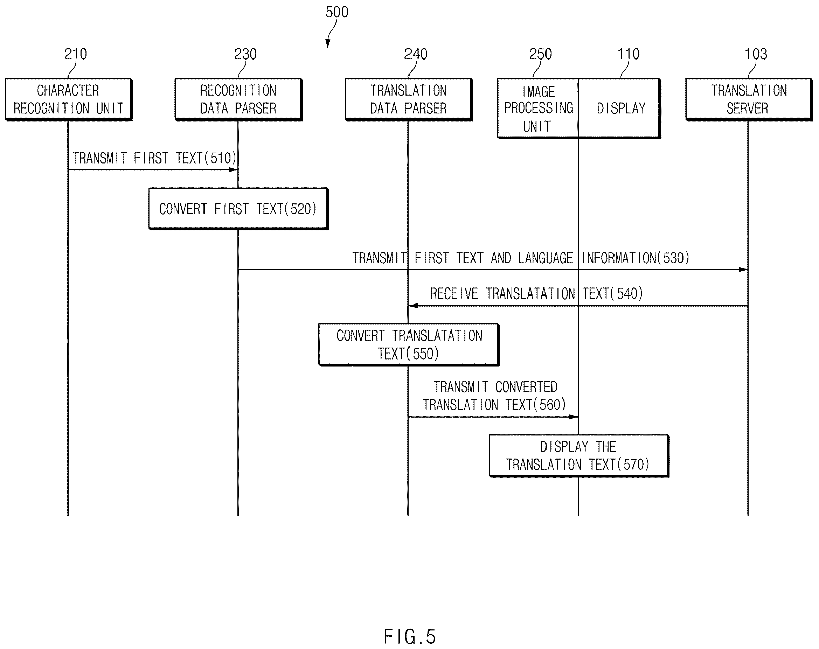

The recognition data parser 230 may transmit the converted first text or the converted second text to the translation server 103 through the communication circuit 140. Additional information about the recognition data parser 230 may be provided through FIG. 5

The translation data parser (a second data manager) 240 may receive a text (hereinafter, referred to as a "translation text") translated by the translation server 103, through the communication circuit 140. The translation data parser 240 may delete unnecessary data (e.g., a symbol identification mark, data added depending on transmission, and the like) from the received translation text and may extract data to be displayed through the display 110.

For example, when requesting the translation server 103 to translate Korean words of " 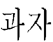 & 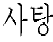 " into English, the translation data parser 240 may receive "Snack & Candy" as the translation text, from the translation server 103. The translation data parser 240 may convert "&" in "Snack & Candy" to "&".

The image processing unit 250 may receive text to be displayed through the display 110 and placement information, from the translation data parser 240. The image processing unit 250 may generate an output image to be displayed on the display 110, based on the received information.

The communication circuit 140 may transmit and/or receive data to and/or from the character recognition server 102 and the translation server 103.

According to various embodiments, the communication circuit 140 may transmit the vision input received from the camera module 130, to the character recognition server 102. For example, the communication circuit 140 may transmit a JPEG image and recognition classification information to the character recognition server 102.

The communication circuit 140 may transmit the result in which the character recognition server 102 performs the server character recognition process, to the recognition data parser 230. The communication circuit 140 may receive the second text recognized from the character recognition server 102 and the placement information of the second text to transmit the second text and the placement information of the second text to the recognition data parser 230.

According to various embodiments, the communication circuit 140 may transmit an original text recognized through the local character recognition process or the server character recognition process, to the translation server 103. The communication circuit 140 may receive the translation text associated with the original text to transfer the translation text to the translation data parser 240.

The character recognition server 102 may receive the vision input (image data) from the electronic device 101. The character recognition server 102 may sense characters included in the received vision input. The character recognition server 102 may transmit, to the electronic device 101, a second text sensed through the character recognition process and placement information (e.g., coordinate information, size information, shape information, and the like) of the second text. In an embodiment, the character recognition server 102 may directly transmit the server character recognition result to the translation server 103.

The translation server 103 may receive the original text (e.g., a first text or a second text) and language information (e.g., original language and translation target language) from the electronic device 101. The translation server 103 may transmit the translation text obtained by translating the original text into a translation target language, to the electronic device 101.

According to an embodiment, the translation server 103 may transmit a translation text corresponding to a text received from the character recognition server 102, to the electronic device 101. The translation server 103 may generate the translation text corresponding to the text received from the character recognition server 102, based on information about a translation target language received from the character recognition server 102 or the electronic device 101 or predetermined language information.

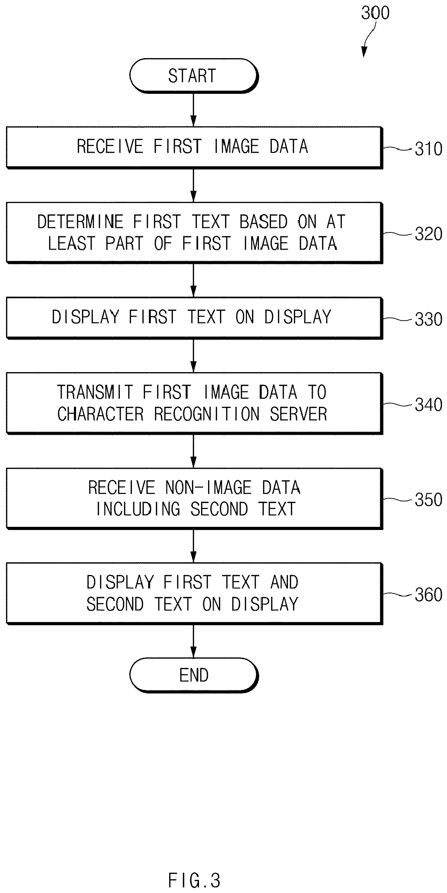

FIG. 3 is a flowchart illustrating a character recognition process, according to various embodiments of the disclosure.

Referring to FIG. 3, in operation 310 of a method 300, the processor 160 may receive first image data from the camera module 130. The first image data may be a vision input for performing a character recognition process.

According to various embodiments, when a separate user input arises or when a specified application is executed, the processor 160 may perform a character recognition process. For example, when a separate user input (e.g., a button input or a voice input) is generated while a camera app for capturing a photo or a video is executed (while a live view image is output), the processor 160 may perform the character recognition process. For another example, the processor 160 may automatically perform the character recognition process in response to the call of another application (e.g., a travel application) supporting character translation.

In operation 320, the processor 160 may determine a first text based on at least part of the first image data. The first text may be a text sensed depending on the local character recognition process. The processor 160 may generate a first text being data structured by extracting characters from the vision input.

In an embodiment, the first text may be one unit of a character, a word, a line, a block, or a page. For example, the first text may be one character unit such as 'A', 'B', or 'C'. For another example, the first text may be a word unit such as "Father", "Mom", "Man", "Woman", and the like.

The processor 160 may recognize each character; and the processor 160 may determine whether to maintain the recognized character as one character, or whether to structure the recognized character as a word, a line, and the like, based on information of a placement relationship, a location, a size, and the like of each character.

According to various embodiments, the processor 160 may combine placement information (e.g., coordinate information, size information, shape information, and the like) of the first text with the first text.

According to various embodiments, the processor 160 may request the translation server 103 to translate the first text being an original text.

In operation 330, the processor 160 may display the first text on the display 110. In an embodiment, the processor 160 may combine a live view image and the first text to display the combined result on the display 110, based on the placement information (e.g., coordinate information, size information, shape information, and the like) of the first text.

Before a server character recognition process is terminated, the processor 160 may display the first text sensed depending on a local character recognition process, on the display 110, thereby reducing the waiting time of a user.

According to various embodiments, when the electronic device 101 moves over a specified range after the local character recognition process proceeds, the processor 160 may correct the placement information (e.g., coordinate information, size information, shape information, and the like) of the first text based on the movement range of the electronic device 101.

In operation 340, the processor 160 may transmit first image data (vision input) to the external character recognition server 102 through the communication circuit 140. The processor 160 may perform operation 340 before operation 320 and operation 330; alternatively, the processor 160 may perform operation 340 between operation 320 and operation 330

In operation 350, the processor 160 may receive non-image data including a second text from the character recognition server 102 through the communication circuit 140. The second text may be text sensed depending on the server character recognition process. The character recognition server 102 may generate the second text being data structured by extracting characters from the vision input.

According to various embodiments, the character recognition server 102 may combine placement information (e.g., coordinate information, size information, shape information, and the like) of the second text with the second text. The character recognition server 102 may transmit the sensed second text and the placement information of the second text to the electronic device 101.

According to various embodiments, the processor 160 may request the translation server 103 to translate the second text being the original text.

In operation 360, the processor 160 may display the first text and the second text on the display 110 together. The second text by the server character recognition process may be a text, which is not sensed in the local character recognition process. The processor 160 may output the recognition result according to the local character recognition process and the result according to the server character recognition process together, thereby improving the accuracy of character recognition.

In an embodiment, the processor 160 may combine a live view image with the first text and the second text to display the combined result on the display 110, based on the placement information (e.g., coordinate information, size information, shape information, and the like) of each of the first text and the second text.

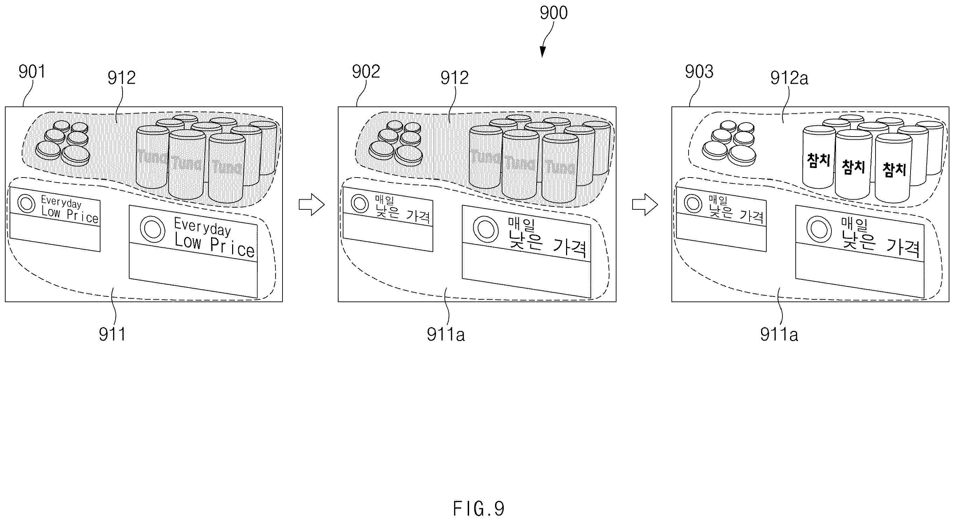

According to an embodiment, the processor 160 may compare the recognition result according to the local character recognition process with the result according to the server character recognition process to display the added text on the display 110. The processor 160 may additionally display a text in an area, in which characters are not detected in the local character recognition process, thereby improving the accuracy of character recognition. According to various embodiments, the processor 160 may apply an image conversion effect (e.g., an effect of sharpening the second text after blur) to the added text to display the added text on the display 110. Additional information about the image conversion effect may be provided through FIG. 9.

According to another embodiment, the processor 160 may change at least part of the first text displayed on the display 110, based on at least part of the second text. For example, the processor 160 may compare the recognition result according to the local character recognition process with the result according to the server character recognition process; when the result indicates that the recognition result according to the local character recognition process and the result according to the server character recognition process are different from each other, the processor 160 may display the second text preferentially.

According to another embodiment, the processor 160 may display only the second text being the server character recognition result on the display 110, without displaying the first text being the local character recognition result.

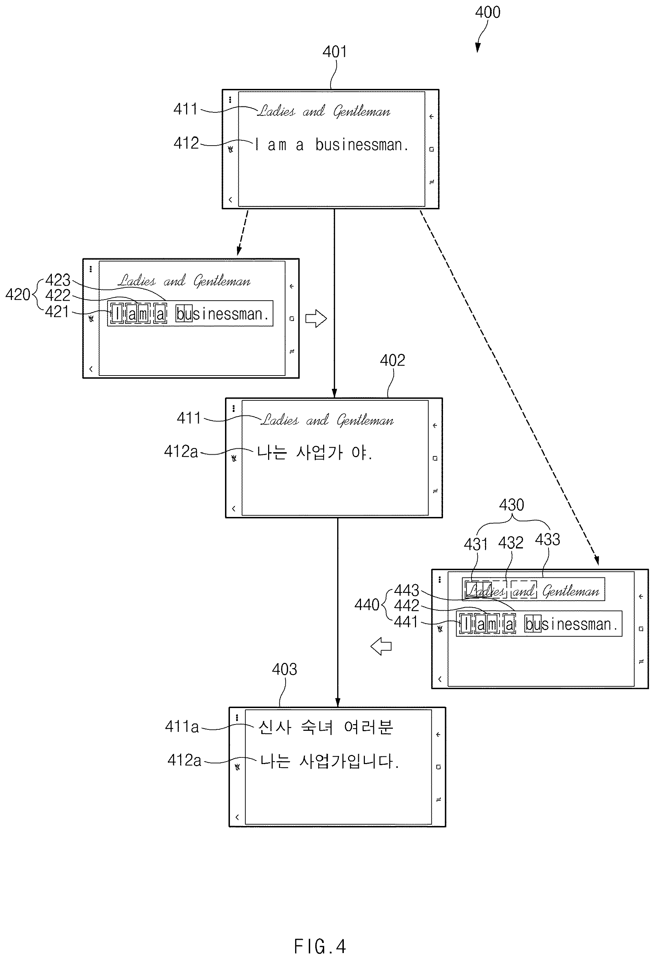

FIG. 4 is a screen view illustrating a difference between a local character recognition result and a server character recognition result, according to various embodiments of the disclosure.

Referring to FIG. 4, in view 400 the camera module 130 may collect image data (vision input) 401 for character recognition. The collected image data 401 may be transmitted to the processor 160. The image data 401 may include a first character area 411 and a second character area 412.

The processor 160 may perform a local character recognition process based on the received image data 401. The processor 160 may extract characters from the image data 401. The processor 160 may convert the extracted characters into structured data. For example, the processor 160 may not recognize characters in the first character area 411, on which graphic processing is performed, and may process the first character area 411 as a general image area. The processor 160 may determine that the second character area 412 is an area including characters and may perform the local character recognition process.

With regard to "I am a businessman." included in the second character area 412, the processor 160 may recognize that 'I', 'a', 'm', 'a', 'b', 'u', 's', 'i', 'n', 'e', 's', 's', 'm', 'a', 'n', and '.' are characters 421, respectively. The processor 160 may combine the recognized characters 421 to recognize "I", "am", "a", "businessman", and "." as words 422, respectively. The processor 160 may combine the recognized words 422 to recognize that "I am a businessman." is one line 423.

In a first translation screen 402, the processor 160 may output a local translation text 412a based on the local character recognition result. The local translation text 412a may be a text obtained by translating a first text 420 sensed in the local character recognition process.

The image data 401 collected through the camera module 130 may be also transmitted to the external character recognition server 102. The image data 401 may include the first character area 411 and the second character area 412.

The character recognition server 102 may perform the server character recognition process based on the received image data 401. The character recognition server 102 may extract characters from the image data 401. The character recognition server 102 may convert the extracted characters into structured data.

For example, the character recognition server 102 may determine that the first character area 411 and the second character area 412, on each of which graphic processing is performed, are areas including characters and may perform the server character recognition process.

With regard to "Ladies and Gentlemen" included in the first character area 411, the character recognition server 102 may recognize 'L', 'a', 'd', 'i', 'e', 's', 'a', 'n', 'd', 'G', 'e', 'n', 't', 'l', 'e', 'm', 'e', and 'n' as characters 431, respectively. The character recognition server 102 may combine the recognized characters 431 to recognize that "Ladies", "and", and, "Gentlemen" are words 432, respectively. The character recognition server 102 may combine the recognized words 432 to recognize that "Ladies and Gentlemen" is one line 433.

With regard to "I am a businessman." included in the second character area 412, the character recognition server 102 may recognize 'I', 'a', 'm', 'a', 'b', 'u', 's', 'i', 'n', 'e', 's', 's', 'm', 'a', 'n', and '.' as characters 441, respectively. The character recognition server 102 may combine the recognized characters 441 to recognize that "I", "am", "a", "businessman", and "." are words 442, respectively. The character recognition server 102 may combine the recognized words 442 to recognize that "I am a businessman." is one line 443.

According to various embodiments, in a second translation screen 403, the processor 160 may output a server translation text 411a and the local translation text 412a based on the local character recognition result and the server character recognition result. The local translation text 412a may be a text obtained by translating the first text 420 sensed in the local character recognition process, and the server translation text 411a may be a text obtained by translating the second text 430 and 440 sensed in the server character recognition process.

According to various embodiments, the processor 160 may apply an image conversion effect (e.g., an effect of sharpening the server translation text 411a after performing blur processing on the first character area 411) to the added server translation text 411a to display the added server translation text 411a.

According to various embodiments, when receiving the server character recognition result from the character recognition server 102, the processor 160 may compare the server character recognition result with the local character recognition result. For example, when the server character recognition result and the local character recognition result are the same as each other, the processor 160 may maintain the translation result according to the local character recognition process. When the server character recognition result and the local character recognition result are different from each other, the processor 160 may output the translation text based on the translation result according to the server character recognition process.

FIG. 5 is a signal flowchart illustrating a translation process of a first text through a translation server, according to various embodiments of the disclosure.

Referring to FIG. 5, in operation 510 of a method 500, the character recognition unit 210 may transmit a first text sensed in a local character recognition process, to the recognition data parser 230.

In operation 520, the recognition data parser 230 may convert the first text according to the local character recognition result in the form capable of easily recognized by the translation server 103. For example, the recognition data parser 230 may convert the received first text in units of lines such that the translation server 103 easily translates the received first text.

In operation 530, the recognition data parser 230 may transmit the first text and language information to the translation server 103. The language information may include the original language of the first text and information about a translation request language. For example, the recognition data parser 230 may transmit data in the form of " 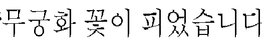 ./ko/en", to the translation server 103.

In operation 540, the translation data parser 240 may receive the translated text from the translation server 103. For example, the translation data parser 240 may receive the data in the form of "Hibiscus have bloomed.", from the translation server 103.

In operation 550, the translation data parser 240 may convert the received translation text. The translation data parser 240 may delete unnecessary data, and may extract the data to be displayed through the display 110. The translation data parser 240 may combine the received translation text with coordinate information, language information, and the like. For example, the translation data parser 240 may convert the translation text in the form of "Hibiscus have bloomed." into the form of "(10.10 - 100.30)/Hibiscus have bloomed./ko/en".

In operation 560, the translation data parser 240 may transmit the converted translation text to the image processing unit 250.

In operation 570, the image processing unit 250 may display the translation text received through the display 110.

According to various embodiments, the recognition data parser 230 may receive the second text according to the server character recognition result. The recognition data parser 230 may translate the second text in the manner the same as or similar to operation 520 to operation 570.

FIG. 6 is a flowchart associated with settings of a recognition target language, according to various embodiments of the disclosure.

Referring to FIG. 6, in operation 610 of a method 600, the processor 160 may receive an image frame (vision input) for character recognition through the camera module 130.

In operation 620, the processor 160 may determine whether recognition language information received through the character recognition server 102 in the previous image frame is included in the memory 170 (e.g., a translation result storage DB).

When the stored recognition language information is absent, in operation 630, the processor 160 may perform a local character recognition process depending on the recognition language information according to default settings to sense a first text. For example, the recognition language information according to default settings may be English, and the processor 160 may perform a process of detecting English language characters (alphabets).

According to various embodiments, when receiving the recognition language information from the character recognition server 102 through the separately performed server character recognition process, the processor 160 may store the recognition language information in the memory 170. The local character recognition process may be quickly performed on the subsequent image frames based on the recognition language information stored in the memory 170.

When the recognition language information about the previous image frame is stored, in operation 640, the processor 160 may perform the local character recognition process to sense the first text, based on the stored recognition language information. For example, when the stored recognition language information is in Japanese, the processor 160 may perform a process of sensing Japanese characters (hiragana or katakana).

In operation 650, the processor 160 may display the sensed first text (or the translation text of the first text) on the display 110.

A character recognizing method according to various embodiments may be performed by an electronic device; the character recognizing method may include receiving image data from an image sensor of a camera module, determining a first text based on at least part of the image data, displaying the determined first text on the display, transmitting the image data to an external server through the communication circuit, receiving non-image data including a second text from the external server, and displaying the second text on the display together with the first text and/or changing at least part of the first text displayed on the display based on at least part of the second text, after the displaying of the determined first text.

FIG. 7 is a view associated with setting of a recognition target language, according to various embodiments of the disclosure.

Referring to FIG. 7, a character recognition system 700 may recognize characters in the image captured by the electronic device 101 to display the recognized characters on the display 110 of the electronic device 101. The processor 160 of the electronic device 101 may receive image data of successive frames. The processor 160 may sequentially output the image data on the display 110 to output a live view image. The processor 160 may add a text, which is recognized in an image frame through a local character recognition process or a server character recognition process, to the live view image to display the added result.

According to various embodiments, the processor 160 may determine image frames on which the local character recognition process or the server character recognition process is performed. For example, the processor 160 may perform the local character recognition process or the server character recognition process on a first image frame F0 and a second image frame F1, which are successive.

For another example, the processor 160 may perform the local character recognition process or the server character recognition process on the first image frame F0 and the second image frame F1, which have a specified time interval (or a frame interval).

According to various embodiments, the processor 160 may dynamically determine image frames on which the local character recognition process or the server character recognition process is performed. For example, when the image change between image frames is not great or when the movement distance of an electronic device is small, the processor 160 may widen a time interval between the first image frame F0 and the second image frame F1 on which a character recognition process is performed. For another example, when the image change between image frames is great or when the movement distance of an electronic device is great, the processor 160 may narrow a time interval between the first image frame F0 and the second image frame F1 on which the character recognition process is performed.

The processor 160 may receive data associated with the first image frame F0, on which the character recognition process is performed, from the camera module 130. The processor 160 may perform the local character recognition process based on the data of the first image frame F0. The local character recognition process may be a process of analyzing texts included in the first image frame F0 through internal calculations of the electronic device 101, without using the external character recognition server 102.

The processor 160 may determine whether the recognition language information is stored in the translation result storage DB 225. When the character recognition process is not performed before the first image frame F0, separate recognition language information may not be stored in the translation result storage DB 225. In this case, the processor 160 may perform a local character recognition process depending on the recognition language information according to default settings to sense a first text. The sensed first text may be output through the display 110.

Apart from the local character recognition process, the data of the first image frame F0 may be transmitted to the external character recognition server 102. The transmission may be performed before the local character recognition process or while the local character recognition process is performed.

When the server character recognition process associated with the first image frame F0 is terminated, the processor 160 may receive the recognition language information from the character recognition server 102. For the local character recognition process in the subsequent image frame, the processor 160 may store the recognition language information in the translation result storage DB 225.

The processor 160 may receive data associated with the second image frame F1, on which the character recognition process is performed, from the camera module 130. The processor 160 may perform the local character recognition process based on the data of the second image frame F1. The recognition language information about the first image frame F0 on which character recognition has been performed previously may be stored in the translation result storage DB 225. The stored recognition language information may be stored after the server character recognition process associated with the first image frame F0 is terminated.

The processor 160 may perform a local character recognition process depending on the stored recognition language information to sense a first text. The sensed first text may be output through the display 110.

The processor 160 may perform the local character recognition process on a third image frame F2 and a fourth image frame F3 in the manner the same as the second image frame F1.

The recognition language information may be stored in the translation result storage DB 225 depending on the server character recognition result associated with the previous image frame. The processor 160 may not perform the local character recognition process using the automatic language sensing method. The processor 160 may perform the local character recognition process, based on default settings or the pre-stored recognition language information. As such, the speed of the local character recognition process may increase, and the waiting time of the user may decrease.

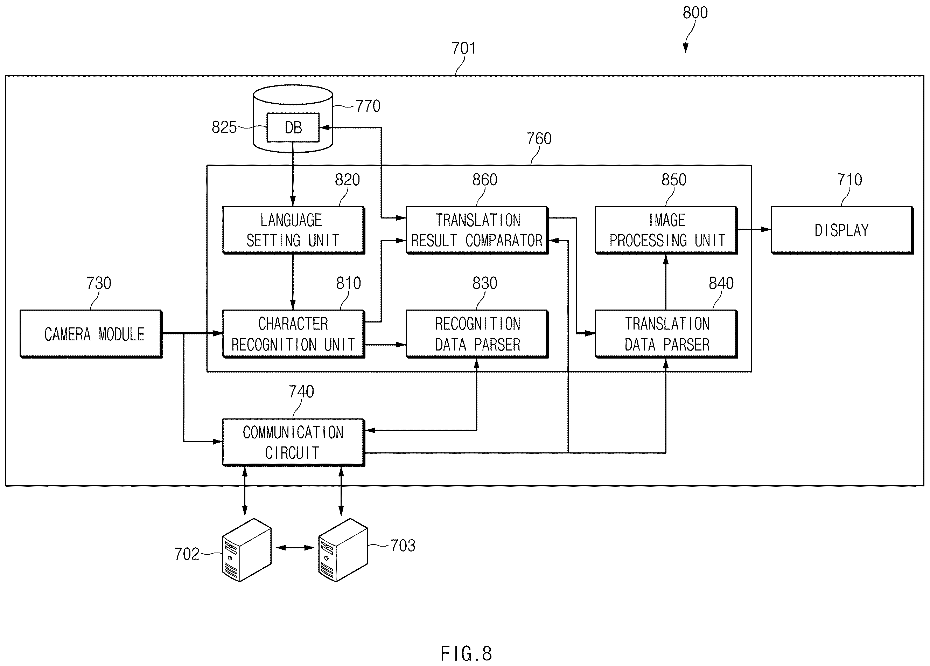

FIG. 8 is an internal block diagram of an electronic device that verifies a translation history, according to various embodiments of the disclosure.

Referring to FIG. 8, a character recognition system 800 may include an electronic device 701, a character recognition server 702, and a translation server 703. The character recognition system 800 may recognize characters in the image captured by the electronic device 701, may translate characters into another language, and may display the translated characters on a display 710 of the electronic device 701. The operation of the character recognition system 800 may be the same as or similar to the character recognition system 100 in FIG. 1 or 2.

According to various embodiments, the electronic device 701 may include the display 710, a camera module 730, a communication circuit 740, a processor 760, and a memory 770. The processor 760 may include a character recognition unit 810, a language setting unit 820, a recognition data parser 830, a translation data parser 840, a translation result comparator 860, and an image processing unit 850. The character recognition unit 810, the language setting unit 820, the recognition data parser 830, the translation data parser 840, the translation result comparator 860, and the image processing unit 850 may be programs or a set of instructions, which is executed by the processor 760.

The functions and operations of the display 710, the camera module 730, the communication circuit 740, and the memory 770 may be the same as or similar to the functions and operations of the corresponding configuration in FIG. 1.

According to various embodiments, the memory 170 may store a database 825 associated with the translation history. The database 825 may store data for performing translation through internal calculations of the electronic device 701. For example, the database 825 may store an original text, a translation text, a translation request language, and the like by default settings or a translation history previously performed.

The functions and operations of the character recognition unit 810, the language setting unit 820, the recognition data parser 830, the translation data parser 840, and the image processing unit 850 may be the same as or similar to the functions and operations of the corresponding configuration in FIG. 2.

According to various embodiments, the recognition data parser 830 may convert the first text according to the local character recognition result in the form capable of easily recognized by the translation server 703. For example, the recognition data parser 830 may convert the received first text in units of lines such that the translation server 703 easily translates the received first text.

The recognition data parser 830 may transmit the first text and language information to the translation result comparator 860. The language information may include the original language of the first text and information about a translation request language. For example, the recognition data parser 830 may transmit data in the form of " 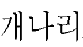 /ko/en", to the translation result comparator 860.

The translation result comparator 860 may determine whether the first text and the translation text corresponding to the translation request language is included in the database 825. The translation result comparator 860 may transmit the first text and the translation text, the language of which is the same as the translation request language, to the translation data parser 840. For example, when receiving " 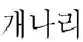 /ko/en", the translation result comparator 860 may transmit "forsythia" to the translation data parser 840.

The translation result comparator 860 may store the translation text, the translation of which is completed through the translation server 703. The translation result comparator 860 may store the result, in which translation is performed on the previous image frame, to use the result for the translation of the same form in a subsequent image frame. In this case, the translation speed may increase by performing translation in the electronic device 701, without making a request for translation to the translation server 703.

The character recognition server 702 may receive the vision input (image data) from the electronic device 701. The character recognition server 702 may sense characters included in the received vision input. The character recognition server 702 may transmit, to the electronic device 701, a second text sensed through the character recognition process and placement information (e.g., coordinate information, size information, shape information, and the like) of the second text.

The translation server 703 may receive the original text (e.g., a first text or a second text) and language information (e.g., original language and translation target language) from the electronic device 701. The translation server 703 may transmit the translation text obtained by translating the original text into a translation target language, to the electronic device 701.

According to various embodiments, the processor 760 may generate a translation text associated with the first text according to the local character recognition result, by using the database 825 associated with the translation history. For example, the character recognition unit 810 may provide the translation result comparator 860 with the first text according to the local character recognition. The translation result comparator 860 may determine whether the matched translation text corresponding to the first text is present in the database 825 associated with the translation history. When the matched translation text is stored, the translation result comparator 860 may provide the translation data parser 840 with the translation text corresponding to the first text.

The processor 760 may receive the translation text associated with the second text according to the server character recognition result, through the translation server 703. The server character recognition result may be transmitted from the character recognition server 702 to the translation server 703 through the electronic device 101. In an embodiment, when a separate communication channel is established between the character recognition server 702 and the translation server 703, the server character recognition result may be directly transmitted from the character recognition server 702 to the translation server 703. The processor 760 may receive the translation text associated with the second text according to the server character recognition result, from the translation server 703.

FIG. 9 is a screen view illustrating an image conversion effect, according to various embodiments of the disclosure.

Referring to FIG. 9, in a screen view 900 the processor 160 may adjust the level of the image effect (e.g., blur processing) depending on the reliability of the recognition result according to a local character recognition process.

The image data 901 may include a first character area 911 and a second character area 912. The processor 160 may perform the local character recognition process on each of the first character area 911 and the second character area 912.

The processor 160 may determine the reliability of character recognition in each area. The first character area 911 may be an area of relatively high reliability of character recognition because of the high sharpness of the image, as an area focused in the shooting process. The second character area 912 may be an area of relatively low reliability of character recognition because of the low sharpness of the image, as an area out-focused in the shooting process.

In a first translation image 902, the processor 160 may display a local character recognition result 911a of the first character area 911. For example, the processor 160 may translate English included in the first character area 911, into Korean to display Korean. The processor 160 may perform blur processing on the second character area 912 to display the blurred result, without displaying the local character recognition result. A user may quickly verify the translation text for the area of interest.

In a second translation image 903, when the character recognition reliability for the second character area 912 through a server character recognition process is not less than a critical value, the processor 160 may display a server character recognition result 912a. For example, the processor 160 may gradually lower the level of blur processing and may clearly display the translation text according to the server character recognition result in the second character area 912. As such, this may prevent the user from feeling the sense of difference according to screen switching.

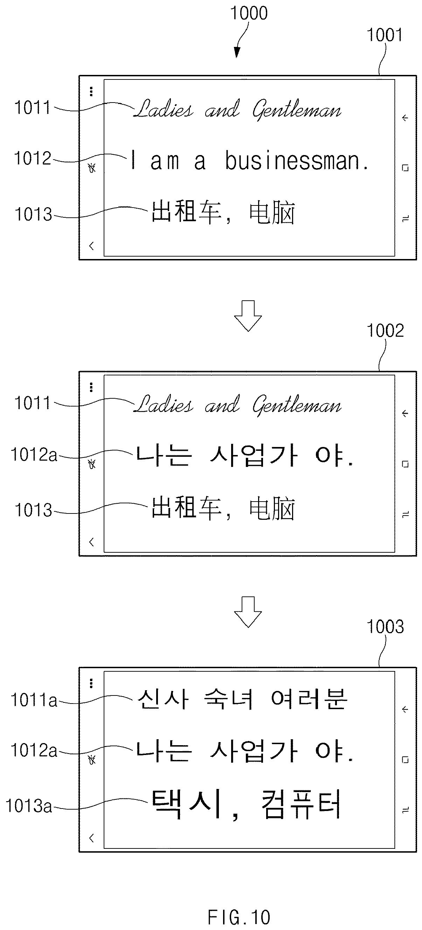

FIG. 10 is a screen view associated with sensing of a plurality of languages, according to various embodiments of the disclosure.

Referring to FIG. 10, in a screen view 1000 the camera module 130 may collect image data (vision input) 1001 for character recognition. The collected image data 1001 may be transmitted to the processor 160. The image data 1001 may include a first character area 1011, a second character area 1012, and a third character area 1013.

The processor 160 may perform a local character recognition process based on the received image data 1001. The processor 160 may extract characters from the image data 1001. The processor 160 may convert the extracted characters into structured data. For example, the processor 160 may not recognize characters in the third character area 1013 including a character, which is not a predetermined recognition target language (e.g., English), and may process the third character area 1013 as a general image area. The processor 160 may not recognize a character in the first character area 1011, which includes a character being a predetermined recognition target language (e.g., English) but on which graphic processing is performed, and may process the first character area 1011 as a general image area. The processor 160 may determine that the second character area 1012 is an area including a character of the predetermined recognition target language (e.g., English) and may perform the local character recognition process.

In a first translation screen 1002, the processor 160 may output a local translation text 1012a based on the local character recognition result. The processor 160 may output a translation text of " 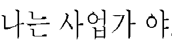 ." with respect to the second character area 1012 through the local character recognition process and may not output the translation text with respect to the first character area 1011 and the third character area 1013.

The image data 1001 collected through the camera module 130 may be also transmitted to the external character recognition server 102. The image data 1001 may include the first character area 1011, the second character area 1012, and the third character area 1013.

The character recognition server 102 may perform the server character recognition process based on the received image data 1001. The character recognition server 102 may extract characters from the image data 1001. The character recognition server 102 may convert the extracted characters into structured data.

The character recognition server 102 may determine the first character area 1011 and the second character area 1012, which include a character of a first language (e.g., English), and the third character area 1013 including a character of a second language (e.g., Chinese) are areas including characters, and may perform the server character recognition process.

In a second translation screen 1003, the processor 160 may output a first server translation text 1011a, and a second server translation text 1013a based on the server character recognition result. The local translation text 1012a may be a text obtained by translating a text sensed through the local character recognition process, and each of the first server translation text 1011a and the second server translation text 1013a may be a text obtained by translating a text sensed through the server character recognition process.

The processor 160 may primarily perform the local character recognition process depending on a translation target language set by default and may supplement the translation text through the server character recognition process.

According to an embodiment, the processor 160 may display the local translation text in a recognizable range in the local character recognition process; afterward, when receiving a server translation text, the processor 160 may change the local translation text to the server translation text.

For example, when recognizing "Ladies" portion as a text in "Ladies and Gentleman" of the first character area 1011 and when not recognizing "and Gentleman" portion as a text, the processor 160 may display " 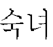 and Gentleman" depending on the local character recognition result with respect to the first character area 1011. When receiving the server translation text of " 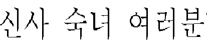 ", the processor 160 may change " 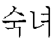 and Gentleman" to " 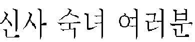 ", depending on the server character recognition result.

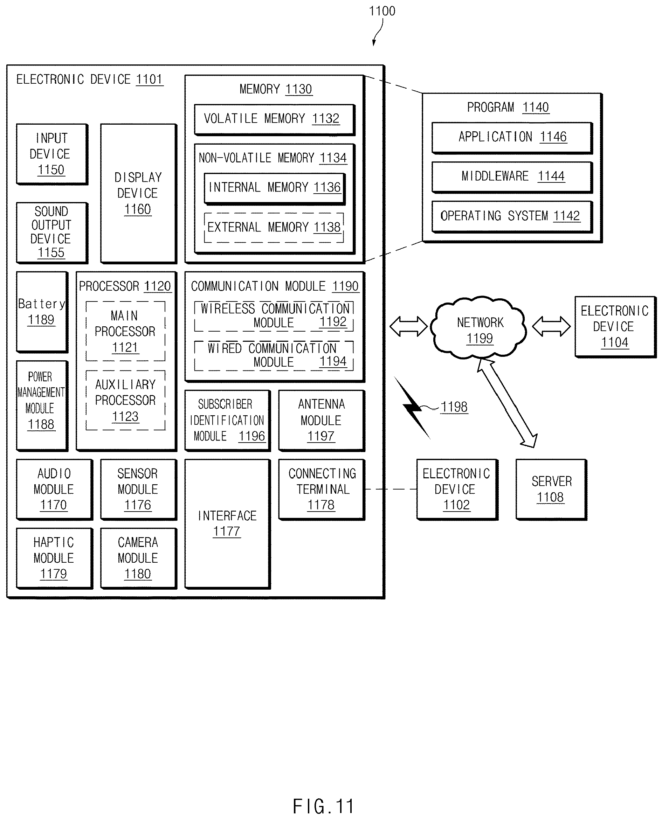

FIG. 11 is a block diagram of an electronic device in a network environment 1100, according to various embodiments of the disclosure.

Referring to FIG. 11, an electronic device 1101 in the network environment 1100 may communicate with an electronic device 1102 over a first network 1198 (e.g., a short range wireless communication network) or may communicate with an electronic device 1104 or a server 1108 over a second network 1199 (e.g., a long distance wireless communication network). According to an embodiment, the electronic device 1101 may communicate with the electronic device 1104 through the server 1108. According to an embodiment, the electronic device 1101 may include a processor 1120, a memory 1130, an input device 1150, a sound output device 1155, a display device 1160, an audio module 1170, a sensor module 1176, an interface 1177, a haptic module 1179, a camera module 1180, a power management module 1188, a battery 1189, a communication module 1190, a subscriber identification module 1196, or an antenna module 1197. In any embodiment, at least one (e.g., the display device 1160 or the camera module 1180) of the components may be omitted from the electronic device 1101, or one or more other components may be further included in the electronic device 1101. In any embodiment, some of the components may be implemented with a single integrated circuit. For example, the sensor module 1176 (e.g., a fingerprint sensor, an iris sensor, or an illumination sensor) may be embedded in the display device 1160 (e.g., a display).

The processor 1120 may execute, for example, software (e.g., a program 1140) to control at least one other component (e.g., a hardware or software component) of the electronic device 1101 connected to the processor 1120, and may perform various data processing or operations. According to an embodiment, as at least a part of the data processing or operations, the processor 1120 may load a command or data received from any other component (e.g., the sensor module 1176 or the communication module 1190) to a volatile memory 1132, may process the command or data stored in the volatile memory 1132, and may store processed data in a nonvolatile memory 1134. According to an embodiment, the processor 1120 may include a main processor 1121 (e.g., a CPU or an application processor) and an auxiliary processor 1123 (e.g., a graphic processing device, an image signal processor, a sensor hub processor, or a communication processor), which may be operated independently of or together with the main processor 1121. Additionally or alternatively, the auxiliary processor 1123 may be configured to use lower power than the main processor 1121 or to be specialized for a specified function. The auxiliary processor 1123 may be implemented separately from the main processor 1121 or may be implemented as a part of the main processor 1121.

The auxiliary processor 1123 may control at least a part of a function or states associated with at least one component (e.g., the display device 1160, the sensor module 1176, or the communication module 1190) of the electronic device 1101, for example, instead of the main processor 1121 while the main processor 1121 is in an inactive (e.g., sleep) state and together with the main processor 1121 while the main processor 1121 is in an active (e.g., an application execution) state. According to an embodiment, the auxiliary processor 1123 (e.g., an image signal processor or a communication processor) may be implemented as a part of any other component (e.g., the camera module 1180 or the communication module 1190) which is functionally (or operatively) associated with the auxiliary processor 1123.

The memory 1130 may store various data which are used by at least one component (e.g., the processor 1120 or the sensor module 1176) of the electronic device 1101. The data may include, for example, software (e.g., the program 1140), or input data or output data associated with a command of the software. The memory 1130 may include the volatile memory 1132 or the nonvolatile memory 1134. The nonvolatile memory 1134 may include an internal memory 1136 and an external memory 1138.

The program 1140 may be stored in the memory 1130 as software, and may include, for example, an operating system 1142, a middleware 1144, or an application 1146.

The input device 1150 may receive a commands or data which will be used by a component (e.g., the processor 1120) of the electronic device 1101, from the outside (e.g., a user) of the electronic device 1101. The input device 1150 may include, for example, a microphone, a mouse, or a keyboard.

The sound output device 1155 may output a sound signal to the outside of the electronic device 1101. The sound output device 1155 may include, for example, a speaker or a receiver. The speaker may be used for a general purpose such as multimedia play or recording play, and the receiver may be used to receive an incoming call. According to an embodiment, the receiver may be implemented separately from the speaker or may be implemented as a part of the speaker.

The display device 1160 may visually provide information to the outside (e.g., the user) of the electronic device 1101. The display device 1160 may include, for example, a display, a hologram device, or a control circuit for controlling a projector and a corresponding device. According to an embodiment, the display device 1160 may include a touch circuitry configured to sense a touch, or a sensor circuitry (e.g., a pressure sensor) configured to measure the strength of force generated by the touch.

The audio module 1170 may convert sound to an electrical signal, or reversely, may convert an electrical signal to sound. According to an embodiment, the audio module 1170 may obtain sound through the input device 1150, or may output sound through the sound output device 1155, or through an external electronic device (e.g., the electronic device 1102) (e.g., a speaker or a headphone) directly or wirelessly connected with the electronic device 1101.

The sensor module 1176 may sense an operation state (e.g., power or a temperature) of the electronic device 1101 or an external environment state (e.g., a user state), and may generate an electrical signal or a data value corresponding the sensed state. According to an embodiment, the sensor module 1176 may include, for example, a gesture sensor, a gyro sensor, a barometric pressure sensor, a magnetic sensor, an acceleration sensor, a grip sensor, a proximity sensor, a color sensor, an infrared (IR) sensor, a biometric sensor, a temperature sensor, a humidity sensor, or an illumination sensor.

The interface 1177 may support one or more specified protocols that may be used to directly and wirelessly connect the electronic device 1101 with an external electronic device (e.g., the electronic device 1102). According to an embodiment, the interface 1177 may include, for example, a high definition multimedia interface (HDMI), a universal serial bus (USB) interface, a secure digital (SD) card interface, or an audio interface.

A connection terminal 1178 may include a connector that may allow the electronic device 1101 to be physically connected with an external electronic device (e.g., the electronic device 1102). According to an embodiment, the connection terminal 1178 may include, for example, a HDMI connector, a USB connector, a SD card connector, or an audio connector (e.g., a headphone connector).

The haptic module 1179 may convert an electrical signal to a mechanical stimulation (e.g., vibration or movement) or an electrical stimulation which the user may perceive through the sense of touch or the sense of movement. According to an embodiment, the haptic module 1179 may include, for example, a motor, a piezoelectric sensor, or an electrical stimulation device.

The camera module 1180 may photograph a still image and a video. According to an embodiment, the camera module 1180 may include one or more lenses, image sensors, image signal processors, or flashes (or electrical flashes).

The power management module 1188 may manage the power which is supplied to the electronic device 1101. According to an embodiment, the power management module 1188 may be implemented, for example, as at least a part of a power management integrated circuit (PMIC).

The battery 1189 may power at least one component of the electronic device 1101. According to an embodiment, the battery 1189 may include, for example, a primary cell not recharged, a secondary cell rechargeable, or a fuel cell.

The communication module 1190 may establish a direct (or wired) communication channel or a wireless communication channel between the electronic device 1101 and an external electronic device (e.g., the electronic device 1102, the electronic device 1104, or the server 1108) or may perform communication through the established communication channel. The communication module 1190 may include one or more communication processors which is operated independently of the processor 1120 (e.g., an application processor) and supports direct (or wired) communication or wireless communication. According to an embodiment, the communication module 1190 may include a wireless communication module 1192 (e.g., a cellular communication module, a short range wireless communication module, or a global navigation satellite system (GNSS) communication module) or a wired communication module 1194 (e.g., a local area network (LAN) communication module or a power line communication module). A corresponding communication module of such communication modules may communicate with an external electronic device over the first network 1198 (e.g., a short range communication network such as Bluetooth, Wi-Fi direct, or infrared data association (IrDA)) or the second network 1199 (e.g., a long distance communication network such as a cellular network, an Internet, or a computer network (e.g., LAN or wide area network (WAN))). The above-described kinds of communication modules may be integrated in one component (e.g., a single chip) or may be implemented with a plurality of components (e.g., a plurality of chips) which are independent of each other. The wireless communication module 1192 may verify and authenticate the electronic device 1101 within a communication network, such as the first network 1198 or the second network 1199, by using subscriber information (e.g., international mobile subscriber identity (IMSI)) stored in the subscriber identification module 1196.

The antenna module 1197 may transmit a signal or a power to the outside (e.g., an external electronic device) or may receive a signal or a power from the outside. According to an embodiment, the antenna module 1197 may include one or more antennas, and at least one antenna which is suitable for a communication scheme used in a computer network such as the first network 1198 or the second network 1199 may be selected, for example, by the communication module 1190 from the one or more antennas. The signal or power may be exchanged between the communication module 1190 and an external electronic device through the selected at least one antenna or may be received from the external electronic device through the selected at least one antenna and the communication module 1190.

At least some of the components may be connected to each other through a communication scheme (e.g., a bus, a general purpose input and output (GPIO), a serial peripheral interface (SPI), or a mobile industry processor interface (MIPI)) between peripheral devices and may exchange signals (e.g., commands or data) with each other.

According to an embodiment, a command or data may be transmitted or received (or exchanged) between the electronic device 1101 and the external electronic device 1104 through the server 1108 connecting to the second network 1199. Each of the electronic devices 1102 and 1104 may be a device, the kind of which is the same as or different from a kind of the electronic device 1101. According to an embodiment, all or a part of operations to be executed in the electronic device 1101 may be executed in one or more external devices of the external electronic devices 1102, 1104, or server 1108. For example, in the case where the electronic device 1101 should perform any function or service automatically or in response to a request from the user or any other device, the electronic device 1101 may request one or more external electronic devices to perform at least a part of the function or service, instead of internally executing the function or service or additionally. The one or more external electronic devices which receive the request may execute at least a part of the function or service thus requested or an additional function or service associated with the request, and may provide a result of the execution to the electronic device 1101. The electronic device 1101 may process received result as it is or additionally, and may provide a result of the processing as at least a part of the response to the request. To this end, for example, a cloud computing, distributed computing, or client-server computing technology may be used.

According to an embodiment, an electronic device includes a housing, a display exposed through a first portion of the housing, an image sensor exposed through a second portion of the housing, a wireless communication circuit, a processor coupled to the display, the image sensor, and the wireless communication circuit, and a memory coupled to the processor, wherein the memory stores instructions, and wherein the instructions, when executed, cause the processor to receive image data from the image sensor, determine a first text based on at least part of the image data, display the determined first text on the display, transmit the image data to an external server through the wireless communication circuit, receive non-image data including a second text from the external server, and display the second text together with the first text on the display and/or change at least part of the first text displayed on the display based on at least part of the second text, after displaying the determined first text.

According to an embodiment, the instructions cause the processor to perform OCR on the image data to determine at least one character.

According to an embodiment, the instructions cause the processor to perform language translation on the determined character to determine the first text. The instructions cause the processor to request an external translation server to translate the determined character through the communication circuit, receive a translation text from the external translation server, and determine the translation text as the first text. The instructions cause the processor to perform language translation on the determined character with reference to a database associated with a translation history stored in the memory. The instructions cause the processor to when translation information matched with the determined character is not verified in the database, request an external translation server to translate the determined character through the communication circuit. The instructions cause the processor to when receiving a translation text associated with the determined character from the external translation server through the communication circuit, update the database.

According to an embodiment, the memory stores information about a recognition target language associated with a previous image frame received from the external server, and the instructions cause the processor to determine the first text, with reference to the information about the recognition target language.

According to an embodiment, the instructions cause the processor to perform blur processing on an area in which the second text is to be displayed, and increase sharpness of the area, when the second text is displayed.

According to an embodiment, the instructions cause the processor to display a preview image on the display by using the image data.

According to an embodiment, an electronic device includes a housing, a display exposed through a first portion of the housing, an image sensor exposed through a second portion of the housing, a wireless communication circuit, a processor coupled to the display, the image sensor, and the wireless communication circuit, and a memory coupled to the processor, wherein the memory stores instructions, and wherein the instructions, when executed, cause the processor to display a preview image obtained from the image sensor, on the display, display a first text including a language translation associated with at least part of a text on the preview image, on the display, and display a second text including language translation associated with at least part of the text on the preview image, in addition to the first text and/or by replacing the at least part of the first text, on the display after displaying the first text. The instructions cause the processor to display the first text and/or the second text so as to at least partly overlap with and/or overlie the text on the preview image.

According to an embodiment, an electronic device includes an image sensor, a display, a memory, a communication circuit, and a processor; wherein the processor is configured to collect image data through the image sensor, transmit the image data to an external server through the communication circuit, sense a first text in the image data, obtain a first translation text associated with the first text, output the first translation text at a location corresponding to the first text, in the image data, receive a second text from the external server through the communication circuit, obtain a second translation text associated with the second text, and output the second translation text at a location corresponding to the second text, in the image data.

According to an embodiment, the instructions cause the processor to receive information about a recognition target language from the external server, when collecting additional image data through the image sensor, sense a third text in the additional image data with reference to the recognition target language.

According to an embodiment, each of the image data and the additional image data is successive image frames or image frames collected at a specified time interval.

According to an embodiment, the instructions cause the processor to request an external translation server to translate the first text into a specified language through the communication circuit, and receive a translation text from the external translation server to determine the first translation text.

According to an embodiment, the instructions cause the processor to determine the first translation text, with reference to a database associated with a translation history stored in the memory. The instructions cause the processor to when translation information matched with the first text is not verified in the database, request an external translation server to translate the first text through the communication circuit. The instructions cause the processor to when receiving a translation text associated with the determined first text from the external translation server through the communication circuit, update the database.

According to an embodiment, a character recognizing method includes receiving image data from an image sensor of a camera module, determining a first text based on at least part of the image data, displaying the determined first text on the display, transmitting the image data to an external server through a communication circuit, receiving non-image data including a second text from the external server, and displaying the second text together with the first text on the display and/or changing at least part of the first text displayed on the display based on at least part of the second text, after the displaying of the determined first text.

According to an embodiment, the method further includes receiving information about a recognition target language from the external server, collecting additional image data through the image sensor, and sensing a third text in the additional image data, with reference to the recognition target language. The collecting of the additional image data includes collecting the additional image data composed of successive image frames or image frames collected at a specified time interval.

According to an embodiment, the method further includes when the received image is a sequence of images and an image change between image frames is less than a predetermined change amount or a movement distance of the electronic device is less than a predetermined distance, increasing a time for processing a next image in the sequence of images.

The above embodiments of the present disclosure are illustrative and not limitative. Various alternatives and equivalents are possible. Other additions, subtractions, or modifications are obvious in view of the present disclosure and are intended to fall within the scope of the appended claims.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. An electronic device comprising:
a housing;
a display exposed through a first portion of the housing;
an image sensor exposed through a second portion of the housing;
a wireless communication circuit;
at least one processor coupled to the display, the image sensor, and the wireless communication circuit; and
a memory coupled to the at least one processor,
wherein the memory stores instructions, and
wherein the instructions, when executed, cause the at least one processor to:
receive image data from the image sensor,
determine a first text based on at least part of the image data,
display the determined first text on the display,
transmit the image data to an external server through the wireless communication circuit,
receive non-image data including a second text from the external server,
and
display the second text together with the first text on the display and/or change at least part of the first text displayed on the display based on at least part of the second text, after displaying the determined first text.

2. The electronic device of claim 1, wherein the instructions cause the at least one processor to:
perform optical character recognition (OCR) on the image data to determine at least one character.

3. The electronic device of claim 2, wherein the instructions cause the at least one processor to:
perform language translation on the determined character to determine the first text.

4. The electronic device of claim 3, wherein the instructions cause the at least one processor to:
request an external translation server to translate the determined character through the wireless communication circuit,
receive a translation text from the external translation server, and
determine the translation text as the first text.

5. The electronic device of claim 3, wherein the instructions cause the at least one processor to:
perform language translation on the determined character with reference to a database associated with a translation history stored in the memory.

6. The electronic device of claim 5, wherein the instructions cause the at least one processor to:
when translation information matched with the determined character is not verified in the database, request an external translation server to translate the determined character through the wireless communication circuit.

7. The electronic device of claim 6, wherein the instructions cause the at least one processor to:
when receiving a translation text associated with the determined character from the external translation server through the wireless communication circuit, update the database.

8. The electronic device of claim 1,
wherein the memory stores information about a recognition target language associated with a previous image frame received from the external server, and
wherein the instructions cause the at least one processor to:
determine the first text, with reference to the information about the recognition target language.

9. The electronic device of claim 1, wherein the instructions cause the at least one processor to:
perform blur processing on an area in which the second text is to be displayed, and
increase sharpness of the area, when the second text is displayed.

10. The electronic device of claim 1, wherein the instructions cause the at least one processor to:
display a preview image on the display by using the image data.

11. An electronic device comprising:
an image sensor;
a display;
a memory;
a communication circuit; and
at least one processor,
wherein the at least one processor is configured to:
collect image data through the image sensor,
transmit the image data to an external server through the communication circuit,
sense a first text in the image data,
obtain a first translation text associated with the first text,
output the first translation text at a location corresponding to the first text, in the image data,
receive a second text from the external server through the communication circuit,
obtain a second translation text associated with the second text, and
output the second translation text at a location corresponding to the second text, in the image data.

12. The electronic device of claim 11, wherein the at least one processor is further configured to:
receive information about a recognition target language from the external server, and
when collecting additional image data through the image sensor, sense a third text in the additional image data with reference to the recognition target language.

13. A character recognizing method of an electronic device, the method comprising:
receiving image data from an image sensor of a camera module;
determining a first text based on at least part of the image data;
displaying the determined first text on the display;
transmitting the image data to an external server through a communication circuit;
receiving non-image data including a second text from the external server; and
displaying the second text together with the first text on the display and/or changing at least part of the first text displayed on the display based on at least part of the second text, after the displaying of the determined first text.

14. The method of claim 13, further comprising:
receiving information about a recognition target language from the external server;
collecting additional image data through the image sensor; and
sensing a third text in the additional image data, with reference to the recognition target language.

15. The method of claim 14, wherein the collecting of the additional image data includes:
collecting the additional image data composed of successive image frames or image frames collected at a specified time interval.
